(19) Europäisches Patentamt / European Patent Office / Office européen des brevets

(11) **EP 4 216 632 A1**

(12) **EUROPEAN PATENT APPLICATION**
published in accordance with Art. 153(4) EPC

(43) Date of publication:
**26.07.2023 Bulletin 2023/30**

(21) Application number: **20958049.7**

(22) Date of filing: **20.10.2020**

(51) International Patent Classification (IPC):
**H04W 72/04** $^{(2023.01)}$

(52) Cooperative Patent Classification (CPC):
**H04W 72/04; Y02D 30/70**

(86) International application number:
**PCT/CN2020/122292**

(87) International publication number:
**WO 2022/082466 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **JI, Yongzhao**
  **Shenzhen, Guangdong 518129 (CN)**
• **YANG, Fei**
  **Shenzhen, Guangdong 518129 (CN)**
• **DONG, Ning**
  **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **WIRELESS COMMUNICATION METHOD AND COMMUNICATION APPARATUS**

(57) Embodiments of this application provide a wireless communication method and a communication apparatus. The method includes: receiving an RRC message from an access device, where the RRC message includes SRS configuration information, the SRS configuration information indicates a plurality of SRS resources, and each of the plurality of SRS resources is sufficient for transmission of one SRS; sending an SRS to the access device based on the SRS configuration information and a preset scheduling policy by using a part of all transmit ports, so that a quantity of SRSs sent to the access device is less than a quantity of the plurality of SRS resources indicated by the SRS configuration information. In this way, a terminal reduces the quantity of sent SRSs, and triggers the access device to reduce a quantity of MIMO layers used for sending a PDSCH, and the terminal may receive data of the PDSCH by using fewer receive antennas. This helps reduce power consumption of the terminal and improve performance of the terminal.

FIG. 6

EP 4 216 632 A1

## Description

## TECHNICAL FIELD

Embodiments of this application relate to the field of communication technologies, and in particular, to a wireless communication method and a communication apparatus.

## BACKGROUND

When a base station sends data of a physical downlink shared channel (PDSCH) to a terminal, a quantity of receive antennas of the terminal needs to be greater than or equal to a quantity of multiple-input multiple-output (MIMO) layers of the PDSCH configured by the base station, to ensure that the PDSCH can be correctly received. A larger quantity of MIMO layers that are of the PDSCH and that are configured by the base station indicates that the terminal needs to enable more receive antennas to receive the data of the PDSCH. When more receive antennas are enabled, PDSCH reception power consumption of the terminal is higher.

## SUMMARY

Embodiments of this application provide a wireless communication method and a communication apparatus, to reduce power consumption of a terminal, and improve performance of the terminal.

According to a first aspect, an embodiment of this application provides a wireless communication method. The method may be performed by a terminal or a chip used in the terminal. The method includes: receiving an RRC message from an access device, where the RRC message includes sounding reference signal SRS configuration information, the SRS configuration information indicates a plurality of SRS resources, and each of the plurality of SRS resources is sufficient for transmission of one SRS; and sending an SRS to the access device based on the SRS configuration information and a preset scheduling policy by using a part of all transmit ports, so that a quantity of SRSs sent to the access device is less than a quantity of the plurality of SRS resources indicated by the SRS configuration information, where a quantity of all the transmit ports is equal to the quantity of the plurality of SRS resources indicated by the SRS configuration information, and each transmit port corresponds to one SRS.

Based on the foregoing solution, the terminal may send an SRS to the access device based on the SRS configuration information and the preset scheduling policy by using a part of all transmit ports, so that the quantity of SRSs sent to the access device is less than the quantity of the plurality of SRS resources indicated by the SRS configuration information. In this way, the access device is triggered to reduce, based on the quantity of received SRSs, a quantity of MIMO layers used for sending a PDSCH, so that the terminal can receive data of the PDSCH by using fewer receive antennas. This helps reduce power consumption of the terminal, and further improves performance of the terminal.

In a possible implementation, the method further includes: receiving downlink control information from the access device, where the downlink control information includes indication information of an antenna port for receiving data of a physical downlink shared channel PDSCH, and a quantity of antenna ports for receiving the data of the PDSCH is less than or equal to the quantity of SRSs sent to the access device.

In a possible implementation, the method further includes: receiving the data of the PDSCH by using a part of receive antennas of all receive antennas, where a quantity of the part of receive antennas is greater than or equal to the quantity of antenna ports for receiving the data of the PDSCH.

Based on the foregoing solution, because receive antennas for receiving the data of the PDSCH are reduced, power consumption of the terminal is reduced, and performance of the terminal is improved.

In a possible implementation, before the receiving the RRC message, the method further includes: sending terminal capability information to the access device, where the terminal capability information carries indication information of an SRS transmit port switching capability of the terminal and a maximum quantity of MIMO layers that are of the PDSCH and that are supported by the terminal.

In a possible implementation, the SRS transmit port switching capability supported by the terminal includes an N-transmit and M-receive capability, the quantity of the plurality of SRS resources is equal to M, and both N and M are positive integers.

In a possible implementation, the preset scheduling policy includes a power consumption optimization policy or a dual-card optimization policy.

In a possible implementation, the power consumption optimization policy is activated in a PDSCH high energy efficiency scenario.

In a possible implementation, the dual-card optimization policy is activated in a dual-card concurrency scenario.

In a possible implementation, the method further includes: after the preset scheduling policy is deactivated, sending the SRSs to the access device based on the SRS configuration information by using all the transmit ports.

Based on the foregoing solution, the terminal sends the SRSs to the access device by using all transmit ports, so that a sending amount of data of the PDSCH can be increased, and performance of the terminal can be improved.

According to a second aspect, an embodiment of this application provides a communication apparatus, including a processor and an interface circuit, where the processor is configured to communicate with another apparatus by using the interface circuit, to implement the method according to the first aspect. There are one or more processors.

According to a third aspect, an embodiment of this application provides a communication apparatus. The apparatus may be a terminal, or may be a chip used in the terminal. The apparatus has a function of implementing the method according to the first aspect. The function may be implemented by hardware, or may be implemented by hardware executing corresponding software. The hardware or the software includes one or more modules corresponding to the function.

According to a fourth aspect, an embodiment of this application provides a communication apparatus, including a processor and a memory. The memory is configured to store computer-executable instructions. When the communication apparatus runs, the processor executes the computer-executable instructions stored in the memory, to implement the method according to the first aspect.

According to a fifth aspect, an embodiment of this application provides a communication apparatus, including a unit or a means configured to perform steps of the method according to the first aspect.

According to a sixth aspect, an embodiment of this application further provides a computer program product including instructions. When the computer program product runs on a computer, the method according to the first aspect is implemented.

According to a seventh aspect, an embodiment of this application further provides a computer-readable storage medium. The computer-readable storage medium stores instructions, and when the instructions are run on a computer, the method according to the first aspect is implemented.

## BRIEF DESCRIPTION OF DRAWINGS

FIG. 1 is a schematic diagram of a 2*2 MIMO system;
FIG. 2 is a schematic flowchart of communication between UE and a base station;
FIG. 3 is a schematic diagram of an SRS sending method;
FIG. 4 is a schematic diagram of a structure of a wireless communication system according to an embodiment of this application;
FIG. 5 is a schematic diagram of a structure of a wireless communication device according to an embodiment of this application;
FIG. 6 is a schematic diagram of an SRS sending method according to an embodiment of this application;
FIG. 7(a) to FIG. 7(c) are schematic diagrams of an SRS sending method;
FIG. 8 and FIG. 9 are schematic diagrams of an SRS sending method; and

FIG. 10 and FIG. 11 are schematic diagrams of a communication apparatus according to an embodiment of this application.

## DESCRIPTION OF EMBODIMENTS

A new radio (NR) PDSCH is used to carry downlink data. A PDSCH coding process includes: Scrambling, modulation mapper, layer mapper, precoding & antenna port mapper, resource element (RE) mapper, and orthogonal frequency division multiplexing (OFDM) signal generation are performed on a transport block (TB). After PDSCH coding is complete, a coded transport block is transmitted over an air interface.

The layer refers to a spatial multiplexing degree or a spatial degree of freedom. Layer mapping is to use a spatial multiplexing capability to transmit data of the transport block by layers. For example, it is assumed that there are two layers, data of one transport block is divided into two layers. Data of the two layers is different, and the data of the two layers is combined into the data of one transport block.

Precoding is multiplying by a precoding matrix. The precoding matrix is obtained based on a channel characteristic. Precoding is to change a shape and a direction of a beam, so that a maximum radiation direction is aimed at a terminal.

Antenna port mapping is to map precoded data to an antenna port.

The following describes precoding with reference to an example.

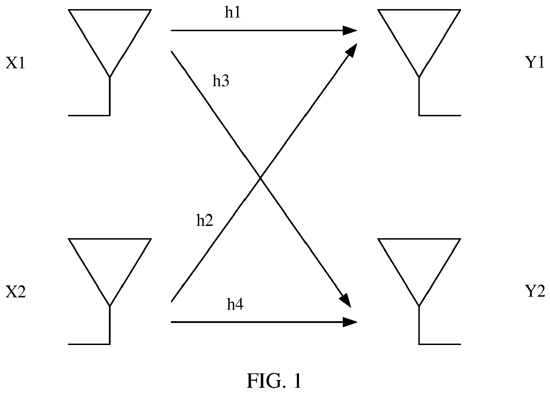

For example, in a simplest 2*2 MIMO system (frequency domain dimension and white Gaussian noise are not considered), there are two base station transmit antennas X1 and X2, two terminal receive antennas Y1 and Y2, and four channel paths h1 to h4. FIG. 1 is a schematic diagram of a 2*2 MIMO system.

$$\begin{bmatrix} y1 \\ y2 \end{bmatrix} = \begin{bmatrix} h1 & h2 \\ h3 & h4 \end{bmatrix} * \begin{bmatrix} x1 \\ x2 \end{bmatrix}$$

In an ideal situation, two groups of antennas do not interfere with each other (h2 = h3 = 0), there is no path loss (h1 = h4 = 1), and received Y is the same as transmitted X. In this case, a channel matrix H is:

$$H = \begin{bmatrix} h1 & h2 \\ h3 & h4 \end{bmatrix} = \begin{bmatrix} 1 & 0 \\ 0 & 1 \end{bmatrix}$$

In this case, a rank of H is 2, and a weight is a diagonal matrix H.

In an actual situation, if there is interference (h2 and h3) and attenuation (h1 and h4) between antennas, H is not a unit matrix. The terminal sends, according to a protocol, a sounding reference signal (SRS) known by a base station to the base station, and the base station compares and calculates an actually received SRS with the known SRS, to obtain a channel matrix H. The channel matrix H is:

$$H = \begin{bmatrix} h1 & h2 \\ h3 & h4 \end{bmatrix} = \begin{bmatrix} y1 \\ y2 \end{bmatrix} * \begin{bmatrix} x1 \\ x2 \end{bmatrix}^{-1}$$

The weight of H is used for precoding.

The following describes a communication process between a terminal and an access device. In the following embodiments, an example in which the terminal is UE and the access device is a base station is used for description.

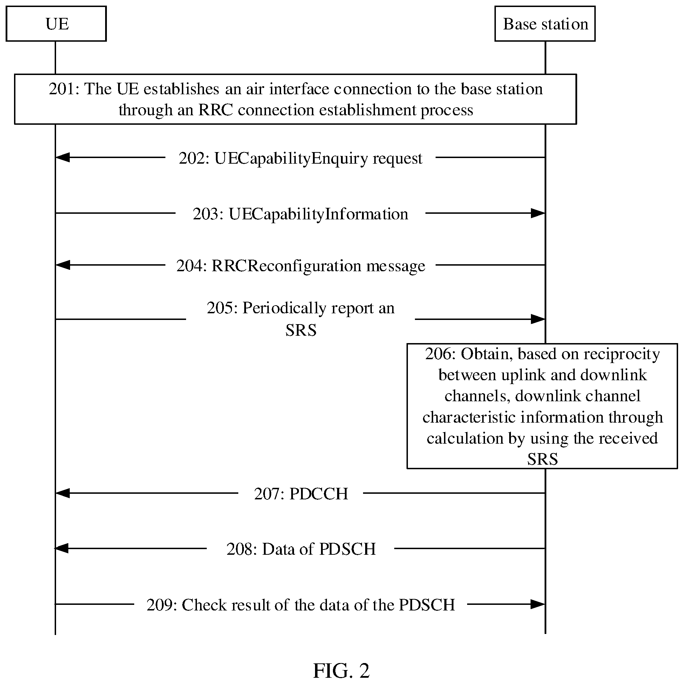

FIG. 2 is a schematic flowchart of communication between UE and a base station, including the following steps.

Step 201: UE establishes an air interface connection to a base station through a radio resource control (RRC) connection establishment process.

Step 202: The base station sends a UECapabilityEnquiry request to the UE, to request to query a UE capability.

Step 203: The UE sends UECapabilityInformation to the base station, to report the UE capability.

The UECapabilityInformation includes maxNumberMIMO-LayersPDS, and the maxNumberMIMO-LayersPDS indicates a maximum quantity of MIMO layers that are of a PDSCH and that are supported by the UE, for example, may be 2, 4, or 8.

The UECapabilityInformation further includes supportedSRS-TxPortSwitch, and the supportedSRS-TxPortSwitch indicates an SRS transmit port switching capability of the UE, for example, may be t1r2, t1r4, t2r4, t1r4-t2r4, t1r1, t2r2, t4r4 or notSupported, where "t" represents transmitting, and "r" represents receiving.

Step 204: The base station sends an RRCReconfiguration message to the UE, to perform RRC reconfiguration on the UE.

The RRCReconfiguration message carries SRS-config, where the SRS-config is used to configure how the UE sends an SRS, or it is understood that the SRS-config indicates a plurality of SRS resources, and each of the plurality of SRS resources is sufficient for transmission of one SRS. For example, the SRS-config includes nrofSRS-Ports, slotOffset, startPosition, periodicity, and the like. The nrofSRS-Ports indicates a quantity of antenna ports for sending an SRS (for example, a value is 1, 2, or 4), the slotOffset indicates a time for sending v, the startPosition indicates a frequency domain for sending an SRS, and the periodicity indicates a periodicity for sending an SRS.

Step 205: The UE periodically reports an SRS.

The UE periodically reports an SRS to the base station based on an SRS sending method configured by the base station by using the RRCReconfiguration message. For example, the UE sends an SRS at a specific time, in a specific frequency domain, and by using a specific port.

For example, the "maxNumberMIMO-LayersPDS" of the UE is "fourLayers", the "supportedSRS-TxPortSwitch" is "t1r4", and the base station configures four sets of SRS-Resource. It should be noted that, when configuring a quantity of MIMO layers of the PDSCH for the UE, the base station needs to ensure that a quantity of receive antennas of the UE is greater than or equal to the quantity of MIMO layers of the PDSCH, to ensure that there are sufficient antennas to receive downlink data of each layer.

It should be noted that, the base station may map a transport block of the PDSCH to a plurality of MIMO layers and send the transport block to the UE, where each antenna port of the UE is configured to receive data of the PDSCH of one MIMO layer. The sum of the data of the PDSCH received by all antenna ports forms a complete transport block of the PDSCH.

One antenna port corresponds to one or more receive antennas.

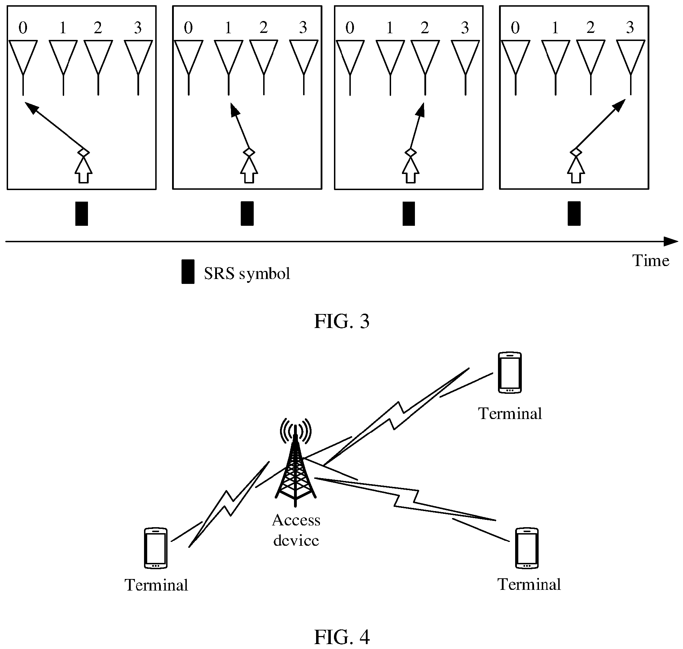

FIG. 3 shows a schematic diagram of an SRS sending method. Each antenna port corresponds to one receive antenna.

The UE sends an SRS on a frequency domain resource allocated by a network at air interface time 1 (air interface slot 1, symbol 1), a port 0, and a corresponding antenna 1.

The UE sends an SRS on a frequency domain resource allocated by a network at air interface time 2 (air interface slot 2, symbol 2), a port 1, and a corresponding antenna 2.

The UE sends an SRS on a frequency domain resource allocated by a network at air interface time 3 (air interface slot 3, symbol 3), a port 2, and a corresponding antenna 3.

The UE sends an SRS on a frequency domain resource allocated by a network at air interface time 4 (air interface slot 4, symbol 4), a port 3, and a corresponding antenna 4.

Step 206: The base station obtains, based on reciprocity between uplink and downlink channels, downlink channel characteristic information through calculation by using the received SRS.

The downlink channel characteristic information includes a rank and a weight of the precoding matrix, and the downlink channel characteristic information is used for PDSCH channel coding. The rank is the quantity of MIMO layers of the PDSCH.

Step 207: The base station sends a physical downlink control channel (PDCCH) to the UE.

The PDCCH carries DCI, the DCI indicates an antenna port for receiving the PDSCH, and a quantity of antenna ports for receiving the PDSCH indicates a quantity of antenna ports for receiving data of the PDSCH by the UE.

Step 208: The base station sends the data of the PDSCH to the UE.

The data of the PDSCH sent by the base station to the UE is data obtained after weight processing of the precoding matrix obtained through calculation in step 206.

Step 209: The UE sends a check result of the data of the PDSCH to the base station.

Based on the foregoing process, communication between the UE and the base station may be implemented.

In the foregoing solution, to ensure that the PDSCH can be correctly received, the quantity of receive antennas of the terminal is always greater than or equal to the quantity of MIMO layers that are of the PDSCH and that are configured by the base station. A larger quantity of MIMO layers that are of the PDSCH and that are configured by the base station indicates that the terminal enables more receive antennas to receive the data of the PDSCH. When more receive antennas are enabled, PDSCH reception power consumption of the terminal is higher.

For example, when the TxPortSwtich capability of the terminal is t1r4, the terminal sends an SRS according to the method shown in FIG. 3. When signal quality is good, the base station monitors air interface channel characteristics of four ports, obtains, based on the reciprocity of the uplink and downlink channels through calculation, that a rank of the precoding matrix of the downlink channel is 4, and then schedules the PDSCH by using four MIMO layers. To ensure that the PDSCH can be correctly received, the quantity of receive antennas of the terminal needs to be greater than or equal to 4. In a typical network configuration (for example, a bandwidth is 100 MHz and subcarrier spacing is 30 kHz), a maximum downlink throughput of four receive antennas can reach 1.6 Gbps. However, in an actual situation on the network, an actual rate of a user is less than 10 Mbps in most of the time. This causes a serious waste of performance and a large power consumption of receiving antennas of the terminal for the PDSCH.

To solve a receiving power consumption problem of the terminal, this embodiment of this application provides a corresponding solution.

The technical solutions in embodiments of this application are mainly applicable to a wireless communication system. The wireless communication system may comply with a wireless communication standard in the 3rd generation partnership project (3GPP), or may comply with another wireless communication standard, for example, an 802 series (for example, 802.11, 802.15, or 802.20) wireless communication standard of the Institute of Electrical and Electronics Engineers (IEEE).

FIG. 4 is a schematic diagram of a structure of a wireless communication system according to an embodiment of this application. The wireless communication system includes an access device and one or more terminals. According to different transmission directions, a transmission link from a terminal to the access device is denoted as an uplink (UL), and a transmission link from the access device to a terminal is denoted as a downlink (DL). Data transmission on an uplink may be referred to as uplink data transmission or uplink transmission for short, and data transmission on a downlink may be referred to as downlink data transmission or downlink transmission for short.

In the wireless communication system, the access device may provide communication coverage for a specific geographical area by using an integrated or external antenna device. One or more terminals located within the communication coverage of the access device may access the access device. One access device may manage one or more cells. Each cell has one identification. The identification is also referred to as a cell identity (cell ID). From a perspective of a radio resource, a cell is a combination of a downlink radio resource and an uplink radio resource (optional) that is paired with the downlink radio resource.

The terminal and the access device know a predefined configuration of the wireless communication system, including a radio access technology (RAT) supported by the system, a radio resource configuration (for example, a basic configuration of a frequency band and a carrier of a radio) specified in the system, and the like. The carrier is a frequency range that complies with a stipulation of the system. The frequency range may be determined jointly based on a center frequency of the carrier (denoted as a carrier frequency) and a bandwidth of the carrier. The configurations predefined by the system may be used as a part of a standard protocol for the wireless communication system, or may be determined through interaction between the terminal and the access device. Content of a related standard protocol may be pre-stored in memories of the terminal and the access device, or reflected as hardware circuits or software code of the terminal and the access device.

In the wireless communication system, the terminal and the access device each support one or more same RATs, for example, new radio (NR), long term evolution (LTE), or a RAT for a future evolved system. Specifically, the terminal and the access device each use a same air interface parameter, a same coding scheme, a same modulation scheme, and the like, and communicate with each other based on the radio resource stipulated by the system.

The terminal in this embodiment of this application is a device that has a wireless transceiver function. The terminal may be deployed on land, for example, an indoor or outdoor device, a handheld device, or a vehicle-mounted device; or may be deployed on a water surface (for example, on a ship); or may be deployed in the air (for example, on a plane, a balloon, or a satellite). The terminal may be a mobile phone, a tablet computer, a computer having a wireless transceiver function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, user equipment (UE), or the like.

The access device is a device that provides a wireless communication function for a terminal. The access device includes but is not limited to a next generation NodeB (gNB) in 5th generation (5G), an evolved NodeB (eNB), a radio network controller (RNC), a NodeB (NB), a base station controller (BSC), a base transceiver station (BTS), a home base station (for example, a home evolved nodeB, or a home node B, HNB), a baseband unit (BBU), a transmission and reception point (TRP), a transmission point (TP), or a mobile switching center.

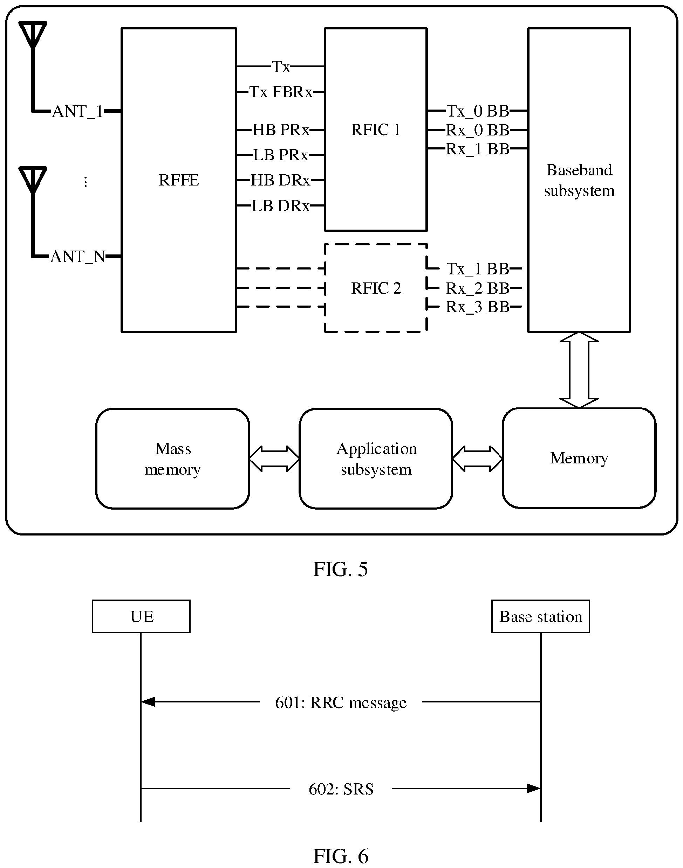

FIG. 5 is a schematic diagram of a structure of a wireless communication device according to an embodiment of this application. The wireless communication device may be the terminal or the access device in embodiments of this application. The wireless communication device may include a plurality of components, for example, an application subsystem, a memory, a mass memory, a baseband subsystem, a radio frequency integrated circuit (RFIC), a radio frequency front-end (RFFE) component, and an antenna (ANT). These components may be coupled through various interconnection buses or in other electrical connection manners.

In FIG. 5, ANT_1 represents a first antenna, ANT_N represents an $N^{th}$ antenna, and N is an integer greater than 1. Tx represents a transmitting path, and Rx represents a receiving path. Different numbers represent different paths. Each path may represent a signal processing channel. FBRx represents a feedback receiving path, PRx represents a primary receiving path, and DRx represents a diversity receiving path. HB represents a high band, LB represents a low band, and HB or LB indicates that a band is comparatively high or low. BB represents a baseband. It should be understood that marks and components in FIG. 5 are merely used for illustration, and merely used as a possible implementation. This embodiment of this application further includes another implementation. For example, the wireless communication device may include more or fewer paths, and include more or fewer components.

The application subsystem may include one or more processors. A plurality of processors may include a plurality of processors of a same type, or may include a combination of a plurality of types of processors. In this application, the processor may be a processor for a general purpose, or may be a processor designed for a specific field. For example, the processor may be a central processing unit (CPU), a digital signal processor (DSP), or a micro control unit (MCU). Alternatively, the processor may be a graphics processing unit (GPU), an image signal processor (ISP), an audio signal processor (ASP), or an AI processor specially designed for an artificial intelligence (AI) application. The AI processor includes but is not limited to a neural network processing unit (NPU), a tensor processing unit (TPU), and a processor referred to as an AI engine.

The radio frequency integrated circuit (including an RFIC 1, and one or more optional RFICs 2) and the radio frequency front-end component may jointly form a radio frequency subsystem. According to different signal receiving or transmitting paths, the radio frequency subsystem may also be classified into a radio frequency receive channel (RF receive path) and a radio frequency transmit channel (RF transmit path). The radio frequency receive channel may receive a radio frequency signal by using an antenna, perform processing (for example, amplification, filtering, and down-conversion) on the radio frequency signal to obtain a baseband signal, and transfer the baseband signal to the baseband subsystem. The radio frequency transmit channel may receive a baseband signal from the baseband subsystem, perform processing (such as up-conversion, amplification, and filtering) on the baseband signal to obtain a radio frequency signal, and finally radiate the radio frequency signal to space by using an antenna. The radio frequency integrated circuit may be referred to as a radio frequency processing chip or a radio frequency chip.

The baseband subsystem processes a baseband signal, and a function of the baseband subsystem is similar to a function of the radio frequency subsystem, that is, processes a radio frequency signal. The baseband subsystem may extract useful information or data bits from the baseband signal, or convert information or data bits into a to-be-sent baseband signal. The information or the data bits may be data that represents user data or control information such as a voice, a text, or video. For example, the baseband subsystem may implement modulation and demodulation, encoding and decoding, and other signal processing operations. For different radio access technologies, for example, 5G NR and 4G LTE, baseband signal processing operations are not completely the same.

The baseband subsystem, similar to the application subsystem, may also include one or more processors. In addition, the baseband subsystem may further include one or more hardware accelerators (HAC). The hardware accelerator may be configured to specially complete some sub-functions with high processing overheads, for example, assembling and parsing a data packet, and encrypting and decrypting a data packet. The sub-functions may also be implemented by using a processor having a general function. However, due to performance or costs, it may be more proper to use the hardware accelerator to implement the sub-functions. In a specific implementation, the hardware accelerator is mainly implemented by using an application-specified integrated circuit (ASIC). Certainly, the hardware accelerator may alternatively include one or more simple processors, for example, an MCU.

The baseband subsystem may be integrated into one or more chips, and the chip may be referred to as a baseband processing chip or a baseband chip. The baseband subsystem may be used as an independent chip, and the chip may be referred to as a modem or a modem chip. The baseband subsystem can be manufactured and sold by the modem chip. The modem chip is sometimes referred to as a baseband processor or a mobile processor. In addition, the baseband subsystem may be further integrated into a larger chip, and is manufactured and sold in a unit of a larger chip. The larger chip may be referred to as a system chip, a chip system, a system on a chip (SoC), or a SoC chip for short. Software components of the baseband subsystem may be built in the hardware component before the chip is delivered, may be imported from another non-volatile memory into the hardware component after the chip is delivered, or may be downloaded and updated online through a network.

In addition, the wireless communication device may further include a memory, for example, a memory and a mass memory in FIG. 5. In addition, the application subsystem and the baseband subsystem may further include one or more caches respectively. In a specific implementation, the memory may be classified into a volatile memory and a non-volatile memory (NVM). The volatile memory is a memory in which data stored in the memory is lost after a power supply is interrupted. Currently, volatile memories are mainly random access memories (RAM), including a static random access memory (SRAM) and a dynamic random access memory (DRAM). The non-volatile memory is a memory in which data stored in the memory is not lost even if a power supply is interrupted. Common non-volatile memories include a read-only memory (ROM), an optical disc, a magnetic disk, various memories based on a flash memory technology, and the like. Generally, a volatile memory may be used as the memory and the cache, and a non-volatile memory, for example, a flash memory, may be used as the mass memory.

In the following embodiments of this application, an example in which the terminal is UE and the access device is a base station is further used for description.

In this embodiment of this application, power consumption of a receive antenna of the UE is positively correlated with a rank of a precoding matrix of a PDSCH. In a low-rate scenario, the UE controls sending of an SRS, to reduce a rank that is of a precoding matrix of a PDSCH and that is obtained by the base station through calculation. Therefore, the base station sends data of the PDSCH to the UE by using fewer MIMO layers, and further triggers the UE to reduce a quantity of receive antennas of the UE, to reduce power consumption of the receive antennas of the UE, and improve energy efficiency of the PDSCH. In a high-rate scenario, a maximum quantity of MIMO layers can be maintained.

The following describes the solutions of embodiments of this application with reference to the accompanying drawings.

FIG. 6 is a schematic diagram of an SRS sending method according to an embodiment of this application. The method includes the following steps.

Step 601: A base station sends an RRC message to UE. Correspondingly, the UE receives the RRC message.

The RRC message includes SRS configuration information (SRS-config), the SRS configuration information indicates a plurality of SRS resources, and each of the plurality of SRS resources is sufficient for transmission of one SRS. In other words, the base station configures, for the UE, the plurality of SRS resources used to send SRSs.

In an implementation, step 601 may be the same as step 204.

Step 602: The UE sends an SRS to the base station based on the SRS configuration information and a preset scheduling policy by using a part of all transmit ports, so that a quantity of SRSs sent to the base station is less than a quantity of the plurality of SRS resources indicated by the SRS configuration information. A quantity of all the transmit ports is equal to the quantity of the plurality of SRS resources indicated by the SRS configuration information, and each transmit port corresponds to one SRS.

It may also be understood that, on the premise that the preset scheduling policy is activated, the UE sends an SRS to the base station based on the SRS configuration by using a part of all transmit ports, so that the quantity of SRSs sent to the base station is less than the quantity of the plurality of SRS resources indicated by the SRS configuration information.

The transmit port herein refers to an antenna port used to send an SRS.

For example, if the quantity of the plurality of SRS resources indicated by the SRS configuration information sent by the base station to the UE is 4, the quantity of all the transmit ports that can be used by the UE to send the SRSs is 4. Therefore, the UE may send four SRSs. However, in a scenario in which the preset scheduling policy is activated, the UE may send an SRS to the base station by using only a part of the four transmit ports. For example, the UE sends three SRSs to the base station by using three transmit ports, or sends two SRSs to the base station by using two transmit ports, where each transmit port is used to send one SRS.

The quantity of all the transmit ports of the UE is related to an SRS transmit port switching capability of the UE. For details, refer to supportedSRS-TxPortSwitch described above. For example, if the UE supports t2r4, the quantity of all the transmit ports of the UE is 4.

It should be noted that, when the UE sends an SRS to the base station by using a part of all transmit ports, transmit power used by the UE may be the same as transmit power in the conventional technology, or may be greater than transmit power in the conventional technology. The base station can accurately receive the SRS sent by the UE by using a part of all transmit ports. For other transmit ports of all the transmit ports, the UE may not send an SRS on these other transmit ports, or may send an SRS on these other transmit ports with low power, so that the sent SRS is submerged by noise, and the base station cannot correctly receive the SRS from these other ports.

After receiving the SRS sent by the UE, the base station calculates a rank of a precoding matrix of a PDSCH, where the rank is a quantity of MIMO layers used for sending the PDSCH. Because the UE sends the SRS to the base station only on a part of all ports, a rank value of the precoding matrix determined by the base station decreases, that is, the value is less than the quantity of SRS resources configured by the base station for the UE. Therefore, a quantity of MIMO layers that are of the PDSCH and that are re-determined by the base station decreases. For example, the base station configures four sets of SRS resources for the UE. The UE may send one SRS by using each of the four transmit ports, that is, may send four SRSs. However, the UE may actually use only two of the transmit ports, and sends two SRSs in total. After receiving the two SRSs, the base station obtains, through calculation, that the rank of the precoding matrix of the PDSCH is equal to 2, and then determines that a quantity of MIMO layers that are subsequently used to send the data of the PDSCH is equal to 2. That is, subsequently, the UE needs to receive, on only two receive antennas, the data of the PDSCH sent by the base station. Previously, the UE needs to receive, on four receive antennas, the data of the PDSCH sent by the base station. Because the UE uses less receive antennas, power consumption of the UE can be reduced.

Based on the foregoing solution, the UE may send an SRS to the base station based on the SRS configuration information and the preset scheduling policy by using a part of all transmit ports, so that the quantity of SRSs sent to the base station is less than the quantity of the plurality of SRS resources indicated by the SRS configuration information. In this way, the base station is triggered to reduce, based on the quantity of received SRSs, the quantity of MIMO layers used for sending the PDSCH, so that the UE can receive the data of the PDSCH by using fewer receive antennas. This helps reduce power consumption of the UE.

In an implementation, before step 602, the base station sends downlink control information (DCI) to the UE, where the DCI carries indication information used to indicate an antenna port for receiving the PDSCH. A quantity of antenna ports for receiving the PDSCH is less than or equal to the quantity of SRSs sent by the UE to the base station. The quantity of antenna ports for receiving the PDSCH is equal to the quantity of MIMO layers for sending the data of the PDSCH by the base station to the UE. That is, the rank that is of the precoding matrix of the PDSCH and that is obtained by the base station through recalculation based on the SRSs reported by the UE decreases, and the rank of the precoding matrix of the PDSCH is equal to the quantity of MIMO layers for sending the PDSCH by the base station to the UE. Subsequently, the UE may receive the data of the PDSCH by using a part of receive antennas of all receive antennas, where a quantity of the part of receive antennas is greater than or equal to the quantity of antenna ports for receiving the data of the PDSCH. For example, a quantity of all receive antennas that may be used by the UE to receive the data of the PDSCH is 4. Each receive antenna corresponds to one antenna port, and is configured to receive the data of the PDSCH at one MIMO layer. The base station indicates, to the UE by using DCI, that the quantity of antenna ports for receiving the data of the PDSCH is 2. In this case, the UE may reduce the quantity of receive antennas used for receiving the data of the PDSCH. For example, the quantity of receive antennas actually used by the UE to receive data of the PDSCH may be 2 or 3. In this way, power consumption of the receive antennas of the UE is reduced.

In an implementation, before step 601, the UE may further send UE capability information (for example, may be UECapabilityInformation) to the base station, where the UE capability information carries indication information of an SRS transmit port switching capability of the UE and a maximum quantity of MIMO layers that are of the PDSCH and that are supported by the UE. For the process, refer to the description in step 203. For example, the indication information of the SRS transmit port switching capability of the UE may be supportedSRS-TxPortSwitch. The maximum quantity of MIMO layers that are of the PDSCH and that are supported by the UE may be indicated by maxNumberMIMO-LayersPDS. The SRS transmit port switching capability supported by the UE includes an N-transmit and M-receive capability, the quantity of the plurality of SRS resources configured by the base station for the UE in step 601 is equal to M, and both N and M are positive integers. For example, the port switching capability of the UE indicated by the indication information that is of the SRS transmit port switching capability of the UE and that is reported by the UE to the base station is t1r4, and the maximum quantity of MIMO layers that are of the PDSCH and that are supported by the UE is 4. In this case, the quantity of SRS resources that are configured by the base station for the UE in step 601 and that are used to send SRSs may be 4.

In an implementation, the preset scheduling policy in step 602 may include a power consumption optimization policy or a dual-card optimization policy.

For example, when the preset scheduling policy includes a power consumption optimization policy. The power consumption optimization policy may be activated in a PDSCH high energy efficiency scenario. That is, when the UE determines that the UE is in a PDSCH high energy efficiency scenario, the UE determines to activate the power consumption optimization policy, and then the UE performs the foregoing step 602. A method for determining whether the UE is in a PDSCH high energy efficiency scenario may be that, if the UE determines that a quantity of transport blocks of the PDSCH received within a statistical periodicity is less than a preset threshold, it indicates that a current downlink data volume of the UE is small, and the UE may determine that the UE is in a PDSCH high energy efficiency scenario.

For another example, when the preset scheduling policy includes a dual-card optimization policy, the dual-card optimization policy may be activated in a dual-card concurrency scenario. That is, when the UE is in a dual-card concurrency scenario, the UE determines to activate the dual-card optimization policy, and then the UE performs the foregoing step 602. The dual-card concurrency scenario means that two subscriber identity module (SIM) cards on the UE are performing services at the same time, for example, one SIM card is used for accessing the Internet, and the other SIM card is used for dialing.

In an implementation, after the foregoing preset scheduling policy is deactivated, the UE sends the SRSs to the base station by using all transmit ports based on the SRS configuration information. That is, when the UE no longer sends the SRSs to the base station in a low power consumption manner, the UE may consider that the UE is in a PDSCH high performance scenario, a single-card scenario, a dual-card non-concurrency scenario, or the like.

The following describes the foregoing process with reference to a specific example.

Example 1

For example, the "maxNumberMIMO-LayersPDS" of the UE is "fourLayers", the "supportedSRS-TxPortSwitch" is "t1r4", and the base station configures four sets of SRS-Resource.

Based on the four sets of SRS-Resource configured by the base station, the UE sends SRSs to the base station by default in the manner shown in FIG. 3. In other words, the UE sends the SRSs by using four antennas in one SRS sending periodicity, each antenna sends one SRS, and each antenna corresponds to one antenna port. It may be considered that the UE is currently in a high performance scenario, and the preset scheduling policy of the UE is deactivated.

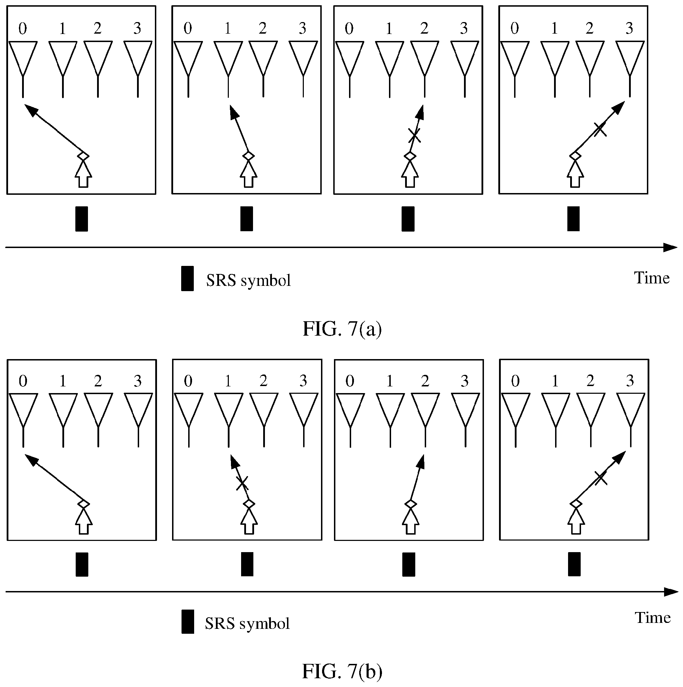

Subsequently, the UE keeps obtaining a quantity of transport blocks that is of the PDSCH and that is received in each statistical periodicity. For example, if the UE determines, at a moment, that a quantity of received transport blocks of the PDSCH in a measurement periodicity is less than a preset threshold, the UE determines that a current downlink data volume is small, and therefore the UE determines that the UE is currently in a high energy efficiency mode. In this case, the UE activates the preset scheduling policy (specifically, the power consumption optimization policy), so that the UE reduces a quantity of SRSs sent in one SRS sending periodicity. As an example, FIG. 7(a) to FIG. 7(c) show three different SRS sending methods. It should be noted that this is merely used as an example. In an actual application, only a quantity of SRSs sent in one SRS sending periodicity needs to be reduced, and this is not limited to a specific sending method.

As shown in FIG. 7(a), an SRS sending method is as follows:

The UE sends an SRS on a frequency domain resource allocated by a network at air interface time 1 (air interface slot 1, symbol 1), a port 0, and a corresponding antenna 1.

The UE sends an SRS on a frequency domain resource allocated by a network at air interface time 2 (air interface slot 2, symbol 2), a port 1, and a corresponding antenna 2.

The UE does not send an SRS or reduces SRS transmit power at air interface time 3 (air interface slot 3, and symbol 3), so that the SRS is overwhelmed by noise.

The UE does not send an SRS or reduces SRS transmit power at air interface time 4 (air interface slot 4, and symbol 4), so that the SRS is overwhelmed by noise.

As shown in FIG. 7(b), an SRS sending method is as follows:

The UE sends an SRS on a frequency domain resource allocated by a network at air interface time 1 (air interface slot 1, symbol 1), a port 0, and a corresponding antenna 1.

The UE does not send an SRS or reduces SRS transmit power at air interface time 2 (air interface slot 2, and symbol 2), so that the SRS is overwhelmed by noise.

The UE sends an SRS on a frequency domain resource allocated by a network at air interface time 3 (air interface slot 3, symbol 3), a port 2, and a corresponding antenna 3.

The UE does not send an SRS or reduces SRS transmit power at air interface time 4 (air interface slot 4, and symbol 4), so that the SRS is overwhelmed by noise.

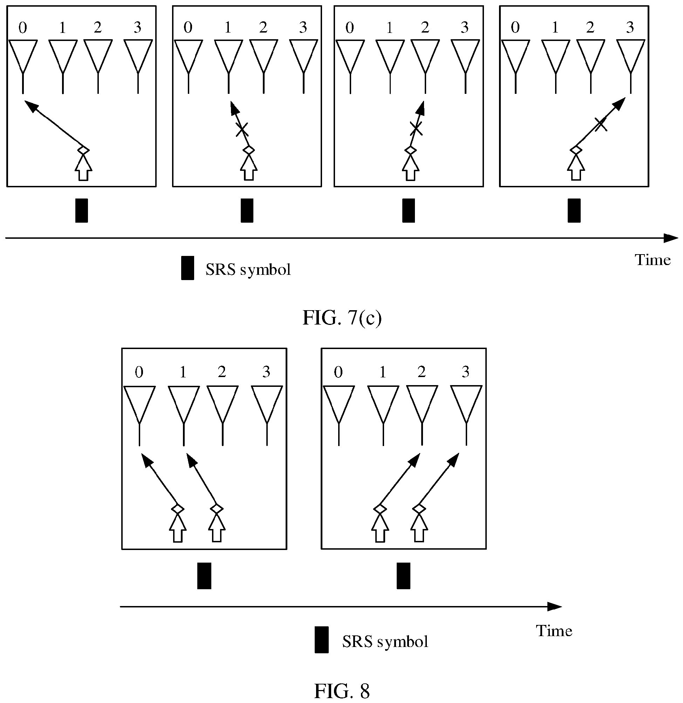

As shown in FIG. 7(c), an SRS sending method is as follows:

The UE sends an SRS on a frequency domain resource allocated by a network at air interface time 1 (air interface slot 1, symbol 1), a port 0, and a corresponding antenna 1;

the UE does not send an SRS or reduces SRS transmit power at air interface time 2 (air interface slot 2, and symbol 2), so that the SRS is overwhelmed by noise;
the UE does not send an SRS or reduces SRS transmit power at air interface time 3 (air interface slot 3, and symbol 3), so that the SRS is overwhelmed by noise; and
the UE does not send an SRS or reduces SRS transmit power at air interface time 4 (air interface slot 4, and symbol 4), so that the SRS is overwhelmed by noise.

Example 2

For example, the "maxNumberMIMO-LayersPDS" of the UE is "fourLayers", the "supportedSRS-TxPortSwitch" is "t2r4", and the base station configures two sets of SRS-Resource.

Based on the two sets of SRS-Resource configured by the base station, the UE sends SRSs to the base station by default in the manner shown in FIG. 8. That is, the UE sends four SRSs to the base station in one SRS sending periodicity, and each antenna sends one SRS, that is, each antenna corresponds to one antenna port. Because the UE supports 2t, two SRSs may be sent at the same time. It may be considered that the UE is currently in a high performance scenario, and the preset scheduling policy of the UE is deactivated.

As shown in FIG. 8, an SRS sending method is as follows:

The UE sends an SRS on a frequency domain resource allocated by a network at air interface time 1 (air interface slot 1, symbol 1), a port 0 and a port 1, and a corresponding antenna 1 and an antenna 2, that is, sends an SRS on the antenna 1 and the antenna 2 respectively.

The UE sends an SRS on a frequency domain resource allocated by a network at air interface time 2 (air interface slot 2, symbol 2), a port 2 and a port 3, and a corresponding antenna 3 and an antenna 4, that is, sends an SRS on the antenna 3 and the antenna 4 respectively.

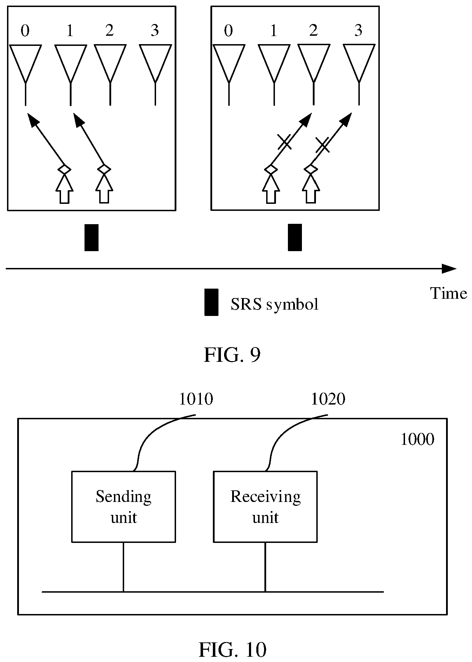

Subsequently, the UE keeps obtaining a quantity of transport blocks that is of the PDSCH and that is received in each statistical periodicity. For example, if the UE determines, at a moment, that a quantity of received transport blocks of the PDSCH in a measurement periodicity is less than a preset threshold, the UE determines that a current downlink data volume is small, and therefore the UE determines that the UE is currently in a high energy efficiency mode. In this case, the UE activates the preset scheduling policy (specifically, the power consumption optimization policy), so that the UE reduces a quantity of SRSs sent in one SRS sending periodicity. For example, FIG. 9 shows an SRS sending method. It should be noted that this is merely used as an example. In an actual application, only a quantity of SRSs sent in one SRS sending periodicity needs to be reduced, and this is not limited to a specific sending method.

As shown in FIG. 9, an SRS sending method is as follows:

The UE sends an SRS on a frequency domain resource allocated by a network at air interface time 1 (air interface slot 1, symbol 1), a port 0 and a port 1, and a corresponding antenna 1 and an antenna 2, that is, sends an SRS on the antenna 1 and the antenna 2 respectively.

The UE does not send an SRS or reduces SRS transmit power at air interface time 2 (air interface slot 2, and symbol 2), a port 2 and a port 3, and a corresponding antenna 3 and an antenna 4, so that the SRS is overwhelmed by noise.

Subsequently, the base station receives the SRS sent by the UE, and calculates the rank (for example, 2 or 1) of the precoding matrix of the PDSCH based on the received SRS. Therefore, the base station indicates, to the UE by using the DCI, the antenna port for receiving the data of the PDSCH. The quantity of antenna ports for receiving the data of the PDSCH is equal to the rank of the precoding matrix of the PDSCH. It indicates that the base station reduces the quantity of MIMO layers to which the data of the PDSCH is mapped. Specifically, a quantity of mapped MIMO layers after adjustment may be equal to the rank of the precoding matrix of the PDSCH. The UE receives the data of the PDSCH sent by the base station. For example, after continuously receiving N expected transport blocks of the PDSCH, the UE adjusts the quantity of receive antennas to the quantity of antenna ports on which the UE actually sends the SRS. The expected transport blocks of the PDSCH herein refer to transport blocks transmitted by using the quantity of mapped MIMO layers after adjustment.

In this embodiment of this application, when determining that the amount of downlink data is small, the UE triggers, by reducing the quantity of SRSs to be sent, the base station to reduce the quantity of MIMO layers to which the data of the PDSCH is mapped. Therefore, the UE may use fewer receive antennas to receive the data of the PDSCH sent by the base station. Specifically, it only needs to ensure that the quantity of receive antennas configured to receive the PDSCH is greater than the quantity of MIMO layers to which the data of the PDSCH is mapped. Because the quantity of receive antennas of the UE is reduced, power consumption of the receive antennas of the UE can be reduced, and performance of the UE is improved.

FIG. 10 is a schematic diagram of a communication apparatus according to an embodiment of this application. The communication apparatus 1000 includes a sending unit 1010 and a receiving unit 1020. The communication apparatus is configured to implement steps of a corresponding terminal in the foregoing embodiments.

The receiving unit 1020 is configured to receive an RRC message from an access device, where the RRC message includes SRS configuration information, the SRS configuration information indicates a plurality of SRS resources, and each of the plurality of SRS resources is sufficient for transmission of one SRS.

The sending unit 1010 is configured to send an SRS to the access device based on the SRS configuration information and a preset scheduling policy by using a part of all transmit ports, so that a quantity of SRSs sent to the access device is less than a quantity of the plurality of SRS resources indicated by the SRS configuration information, where a quantity of all the transmit ports is equal to the quantity of the plurality of SRS resources indicated by the SRS configuration information, and each transmit port corresponds to one SRS.

In a possible implementation, the receiving unit 1020 is further configured to receive downlink control information from the access device, where the downlink control information includes indication information of an antenna port for receiving data of a PDSCH, and a quantity of antenna ports for receiving the data of the PDSCH is less than or equal to the quantity of SRSs sent to the access device.

In a possible implementation, the receiving unit 1020 is further configured to receive the data of the PDSCH by using a part of receive antennas of all receive antennas, where a quantity of the part of receive antennas is greater than or equal to the quantity of antenna ports for receiving the data of the PDSCH.

In a possible implementation, the sending unit 1010 is further configured to: before the receiving unit 1020 receives the RRC message, send terminal capability information to the access device, where the terminal capability information carries indication information of an SRS transmit port switching capability of the terminal and a maximum quantity of MIMO layers that are of the PDSCH and that are supported by the terminal.

In a possible implementation, the SRS transmit port switching capability supported by the terminal includes an N-transmit and M-receive capability, the quantity of the plurality of SRS resources is equal to M, and both N and M are positive integers.

In a possible implementation, the preset scheduling policy includes a power consumption optimization policy or a dual-card optimization policy.

In a possible implementation, the power consumption optimization policy is activated in a PDSCH high energy efficiency scenario.

In a possible implementation, the dual-card optimization policy is activated in a dual-card concurrency scenario.

In a possible implementation, the sending unit 1010 is further configured to: after the preset scheduling policy is deactivated, send the SRSs to the access device based on the SRS configuration information by using all the transmit ports.

Optionally, the communication apparatus may further include a storage unit. The storage unit is configured to store data or instructions (which may also be referred to as code or programs). The foregoing units may interact with or be coupled to the storage unit, to implement a corresponding method or function. The coupling in this embodiment of this application may be an indirect coupling or a communication connection between apparatuses, units, or modules in an electrical form, a mechanical form, or another form, and is used for information exchange between the apparatuses, the units, or the modules.

In this embodiment of this application, division into units in the communication apparatus is merely logical function division. During actual implementation, all or some of the modules or units may be integrated into one physical entity or may be physically separated. In addition, all the units in the communication apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the communication apparatus for implementation. In addition, each unit may alternatively be stored in a memory in a form of a program to be invoked by a processing element of the communication apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing communication apparatuses may be one or more integrated circuits configured to implement the foregoing methods, for example, one or more application-specific integrated circuits (ASICs), or one or more microprocessors (DSPs), or one or more field programmable gate arrays (FPGAs), or a combination of at least two of these integrated circuit forms. For another example, when the units in the communication apparatus may be implemented in a form of scheduling a program by a processing element, the processing element may be a general-purpose processor, for example, a central processing unit (CPU) or another processor that can invoke the program. For still another example, the units may be integrated and implemented in a form of a system-on-a-chip (SOC).

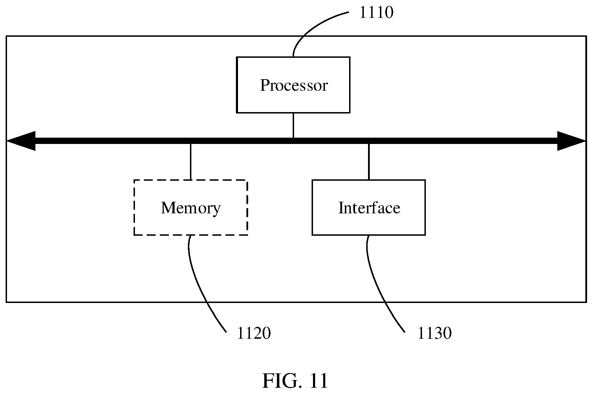

Refer to FIG. 11. FIG. 11 is a schematic diagram of a communication apparatus according to an embodiment of this application. The communication apparatus is configured to implement operations of the terminal in the foregoing embodiments. As shown in FIG. 11, the communication apparatus includes a processor 1110 and an interface 1130. Optionally, the communication apparatus further includes a memory 1120. The interface 1130 is configured to communicate with another device. In this embodiment of this application, the interface may also be referred to as a communication interface, and a specific form of the interface may be a transceiver, a circuit, a bus, a module, a pin, or a communication interface of another type.

The method performed by the terminal in the foregoing embodiments may be implemented by the processor 1110 by invoking a program stored in a memory (which may be the memory 1120 in the terminal or may be an external memory). That is, the terminal may include the processor 1110. The processor 1110 invokes a program in the memory to perform the method performed by the terminal in the foregoing method embodiment. The processor herein may be an integrated circuit having a signal processing capability, for example, a CPU. The terminal may be implemented by one or more integrated circuits configured to implement the above methods, for example, one or more ASICs, one or more microprocessors DSPs, one or more FPGAs, or a combination of at least two of the integrated circuit forms. Alternatively, the foregoing implementations may be combined.

Specifically, a function/implementation process of the sending unit 1010 and the receiving unit 1020 in FIG. 10 may be implemented by the processor 1110 in the communication apparatus 1100 shown in FIG. 11 by invoking computer-executable instructions stored in the memory 1120. Alternatively, a function/implementation process of the sending unit 1010 and the receiving unit 1020 in FIG. 10 may be implemented by using the interface 1130 in the communication apparatus 1100 shown in FIG. 11.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor, any conventional processor, or the like. Steps of the methods disclosed with reference to embodiments of this application may be directly executed and accomplished by a hardware processor, or may be executed and accomplished by using a combination of hardware and software modules in the processor.

In the embodiments of this application, the memory may be a non-volatile memory, a hard disk drive (HDD) or a solid-state drive (SSD), or may be a volatile memory, for example, a random access memory (RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

A person skilled in the art may understand that first, second, and various reference numerals in embodiments of this application are for distinguishing only for ease of description, and are not used to limit the scope of embodiments of this application or represent a sequence. The term "and/or" describes an association relationship for associated objects and represents that three relationships may exist. For example, A and/or B may represent the following three cases: Only A exists, both A and B exist, and only B exists. The character "/" usually indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. The term "a plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the technical solutions in embodiments of this application may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a terminal device, a network device, an artificial intelligence device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (SSD)), or the like.

In embodiments of this application, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A wireless communication method, wherein the method comprises:

   receiving a radio resource control RRC message from an access device, wherein the RRC message comprises sounding reference signal SRS configuration information, the SRS configuration information indicates a plurality of SRS resources, and each of the plurality of SRS resources is sufficient for transmission of one SRS; and
   sending an SRS to the access device based on the SRS configuration information and a preset scheduling policy by using a part of all transmit ports, wherein a quantity of SRSs sent to the access device is less than a quantity of the plurality of SRS resources indicated by the SRS configuration information, a quantity of all the transmit ports is equal to the quantity of the plurality of SRS resources indicated by the SRS configuration information, and each transmit port corresponds to one SRS.

2. The method according to claim 1, wherein the method further comprises:
   receiving downlink control information from the access device, wherein the downlink control information comprises indication information of an antenna port for receiving data of a physical downlink shared channel PDSCH, and a quantity of antenna ports for receiving the data of the PDSCH is less than or equal to the quantity of SRSs sent to the access device.

3. The method according to claim 2, wherein the method further comprises:
   receiving the data of the PDSCH by using a part of all receive antennas, wherein a quantity of the part of receive antennas is greater than or equal to the quantity of antenna ports for receiving the data of the PDSCH.

4. The method according to any one of claims 1 to 3, wherein before the receiving a RRC message, the method further comprises:
   sending terminal capability information to the access device, wherein the terminal capability information carries indication information of an SRS transmit port switching capability of a terminal and a maximum quantity of MIMO layers that are of the PDSCH and that are supported by the terminal.

5. The method according to claim 4, wherein the SRS transmit port switching capability supported by the terminal comprises an N-transmit and M-receive capability, the quantity of the plurality of SRS resources is equal to M, and both N and M are positive integers.

6. The method according to any one of claims 1 to 5, wherein
   the preset scheduling policy comprises a power consumption optimization policy or a dual-card optimization policy.

7. The method according to claim 6, wherein
   the power consumption optimization policy is activated in a PDSCH high energy efficiency scenario.

8. The method according to claim 6, wherein
   the dual-card optimization policy is activated in a dual-card concurrency scenario.

9. The method according to any one of claims 1 to 8, wherein the method further comprises:
   after the preset scheduling policy is deactivated, sending the SRSs to the access device based on the SRS configuration information by using all the transmit ports.

10. A communication apparatus, comprising:
    a processor and a memory, wherein the memory is coupled to the processor, the memory is configured to store program instructions, and the processor is configured to execute the program instructions, to implement the method according to any one of claims 1 to 9.

11. A computer program product comprising instructions, wherein when the computer program product runs on a computer, the method according to any one of claims 1 to 9 is implemented.

12. A computer-readable storage medium, wherein the computer-readable storage medium stores instructions, and when the instructions are run on a computer, the method according to any one of claims 1 to 9 is implemented.

FIG. 1

| UE | | Base station |
|---|---|---|

201: The UE establishes an air interface connection to the base station through an RRC connection establishment process

202: UECapabilityEnquiry request

203: UECapabilityInformation

204: RRCReconfiguration message

205: Periodically report an SRS

206: Obtain, based on reciprocity between uplink and downlink channels, downlink channel characteristic information through calculation by using the received SRS

207: PDCCH

208: Data of PDSCH

209: Check result of the data of the PDSCH

FIG. 2

SRS symbol

FIG. 3

Terminal

Terminal

Access device

Terminal

FIG. 4

FIG. 5

FIG. 6

SRS symbol

Time

FIG. 7(a)

SRS symbol

Time

FIG. 7(b)

FIG. 7(c)

FIG. 8

SRS symbol

Time

FIG. 9

FIG. 10

FIG. 11

| | INTERNATIONAL SEARCH REPORT | International application No. |
|---|---|---|
| | | **PCT/CN2020/122292** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

DWPI; CNABS; CNTXT; USTXT; WOTXT; EPTXT; CNKI; 3GPP: SRS, 探测参考信号, 配置, 端口, 天线, 数量, 个数, 小于, 部分, mimo, sounding reference signal, configuration, port, antenna, number, smaller, part

**C. DOCUMENTS CONSIDERED TO BE RELEVANT**

| Category* | Citation of document, with indication, where appropriate, of the relevant passages | Relevant to claim No. |
|---|---|---|
| X | US 2020204240 A1 (QUALCOMM INC.) 25 June 2020 (2020-06-25)<br>description paragraphs [0045]-[0125] | 1-12 |
| A | CN 111052838 A (QUALCOMM INC.) 21 April 2020 (2020-04-21)<br>entire document | 1-12 |
| A | US 2019174466 A1 (INTEL CORP.) 06 June 2019 (2019-06-06)<br>entire document | 1-12 |
| A | CN 108111283 A (ZTE CORPORATION) 01 June 2018 (2018-06-01)<br>entire document | 1-12 |
| A | CN 110945822 A (LG ELECTRONICS INC.) 31 March 2020 (2020-03-31)<br>entire document | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 July 2021** | **09 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/122292**

| Patent document cited in search report | | | Publication date (day/month/year) | Patent family member(s) | | | Publication date (day/month/year) |
|---|---|---|---|---|---|---|---|
| US | 2020204240 | A1 | 25 June 2020 | WO | 2020131510 | A1 | 25 June 2020 |
| CN | 111052838 | A | 21 April 2020 | EP | 3673691 | A1 | 01 July 2020 |
| | | | | WO | 2019037158 | A1 | 28 February 2019 |
| | | | | WO | 2019037026 | A1 | 28 February 2019 |
| US | 2019174466 | A1 | 06 June 2019 | US | 10863494 | B2 | 08 December 2020 |
| CN | 108111283 | A | 01 June 2018 | US | 2021044400 | A1 | 11 February 2021 |
| | | | | WO | 2019085998 | A1 | 09 May 2019 |
| CN | 110945822 | A | 31 March 2020 | US | 2019200380 | A1 | 27 June 2019 |
| | | | | EP | 3518454 | A1 | 31 July 2019 |
| | | | | WO | 2019108048 | A1 | 06 June 2019 |
| | | | | US | 10624118 | B2 | 14 April 2020 |
| | | | | US | 2019174527 | A1 | 06 June 2019 |
| | | | | KR | 102107712 | B1 | 28 May 2020 |
| | | | | JP | 2020507965 | A | 12 March 2020 |
| | | | | JP | 6826204 | B2 | 03 February 2021 |
| | | | | EP | 3518454 | A4 | 10 June 2020 |
| | | | | US | 10912112 | B2 | 02 February 2021 |
| | | | | KR | 20190065179 | A | 11 June 2019 |

Form PCT/ISA/210 (patent family annex) (January 2015)